# EUROPÄISCHE PATENTSCHRIFT

(11) **EP 2 224 455 B1**
(45) Veröffentlichungstag und Bekanntmachung des Hinweises auf die Patenterteilung: **24.07.2013**
(21) Anmeldenummer: 10153182.0
(22) Anmeldetag: 10.02.2010
(51) Int. Cl.: G21D 1/00, G21F 9/28, G21C 19/20

(54) **Verfahren zum Zerlegen eines unter Wasser befindlichen Anlagenteils einer kerntechnischen Anlage und Vorrichtung zum Durchführen des Verfahrens**
Method for dismantling an assembly component of a nuclear facility under water and device for carrying out the method
Procédé de découpe d'une pièce d'installation se trouvant sous l'eau d'une installation nucléaire et dispositif d'exécution du procédé

(30) Priorität: 27.02.2009 DE 102009001238
(43) Veröffentlichungstag der Anmeldung: 01.09.2010
(73) Patentinhaber: AREVA GmbH, 91052 Erlangen (DE)
(72) Erfinder: Arnold, Hans-Uwe, 63739 Aschaffenburg (DE)
(74) Vertreter: Meissner, Bolte & Partner

(56) Entgegenhaltungen:
- EP-A2- 1 777 711
- US-A- 4 818 472
- US-A- 5 268 550

## Beschreibung

Die Erfindung bezieht sich auf ein Verfahren zum Zerlegen eines unter Wasser befindlichen Anlagenteils einer kerntechnischen Anlage. Außerdem bezieht sich die Erfindung auf eine Vorrichtung zum Durchführen des Verfahrens.

Beim Rückbau einer stillgelegten kerntechnischen Anlage, beispielsweise eines Kernkraftwerkes, gibt es eine Vielzahl radioaktiv kontaminierter Anlagenteile, die vor ihrer Entsorgung in transportierbare Bestandteile zerlegt werden müssen. Um eine radioaktive Belastung des die Zerlegung durchführenden Bedienpersonals zu verhindern, muss eine solche Zerlegung fernbedient unter Wasser durchgeführt werden. Darüber hinaus sollte das Zerlegen mit Geräten und Verfahren stattfinden, bei denen möglichst wenig Sekundärabfall, beispielsweise Späne oder Staub, entsteht, der neben einer Verunreinigung des Wassers auch zu einer die korrekte Durchführung der Zerlegung behindernden Sichteinschränkung führen kann. Bei solchen Anlagenteilen handelt es sich außerdem oftmals um strukturell komplizierte Gebilde mit schwer zugänglichen Bestandteilen, die einen Einsatz spezieller Zerlegevorrichtungen erfordern.

Dabei werden für die Zerlegung bevorzugt mechanische Zerlegwerkzeuge - Säge-, Fräs- oder Bohrwerkzeuge - verwendet, da der mit solchen Werkzeugen entstehende Sekundärabfall hauptsächlich aus groben Partikeln besteht, dessen Handhabung und Entsorgung vereinfacht ist, da er nicht zu einer weitreichenden Trübung und Verunreinigung des im Bereich des Anlagenteils befindlichen Wassers führt. Aus diesem Grund wird die Zerlegung großer hohlzylindrischer Komponenten eines stillgelegten Kernkraftwerkes, beispielsweise einer Kernumfassung, mit einer Bandsäge durchgeführt. Hierzu werden in der Kernumfassung sogenannte Wendelöcher benötigt, in denen ein vertikal (in Richtung der vertikalen Achse des zylindrischen Anlagenteils) ankommendes Sägeband um 90° in die Horizontale gedreht werden kann, um mit einem Horizontalschnitt beginnen zu können, mit dem ein ringförmiger Abschnitt - ein sogenannter Schuss - abgetrennt wird. Danach wird erneut vertikal bis zum nächsten Wendeloch geschnitten, das Sägeblatt gewendet und erneut horizontal gesägt um auf diese Weise den darunter liegenden Schuss abtrennen zu können. Auf diese Weise werden z.B. im Kernmantel sechs Wendelöcher für sieben Schüsse eingebracht.

Diese Wendelöcher müssen ausreichend groß sein, um das Drehen des Sägeblattes der Bandsäge zu ermöglichen. Bei Verwendung eines hartmetallbestückten Fräs- oder Bohrwerkzeuges muss deshalb ein Wendeloch mit einem Durchmesser von wenigstens 50mm eingebracht werden. Um dies in einen Stahlmantel mit einer Wandstärke von etwa 80mm bewerkstelligen zu können, muss das Werkzeug sehr massiv ausgeführt sein und schwingungsfrei an der zu zerlegenden Komponente positioniert werden. Die Anlagenteile eines zum Rückbau vorgesehenen Kernkraftwerkes sind jedoch in Folge langjähriger radioaktiver Bestrahlung aktiviert und dadurch erheblich versprödet. Aufgrund der hohen Aktivität dieser Anlagenteile können Vorversuche allenfalls an nichtaktivierten Anlagenteilen durchgeführt werden. Deshalb besteht ein erhebliches Risiko, dass das verwendete Zerlegewerkzeug beim praktischen Einsatz selbst dann zerstört wird, wenn die an nicht aktivierten Werkstücken vorgenommenen Vorversuche positiv verlaufen sind. Die bisherige Vorgehensweise, bei denen aufwendige Fräs- bzw. Bohrwerkzeuge eingesetzt worden sind, haben deshalb in der praktischen Anwendung den Nachteil, dass im Falle eines Blockierens und anschließenden Bruchs, bei dem das Werkzeug in der Wand stecken bleibt, ein zusätzliches Interventionswerkzeug eingesetzt werden muss. Mit diesem muss entweder der abgebrochen Fräskopf oder Bohrer ausgebohrt werden oder es muss ein neues Wendeloch außerhalb der geplanten horizontalen Ebene eingefügt werden, da mit der Bandsäge die mit einem Hartmetall bestückten Werkzeuge nicht durchschnitten werden können. Dies erfordert einen erhöhten Bearbeitungsaufwand. Durch die Verlagerung des Horizontalschnittes in eine andere Ebene haben die zerlegten Teile außerdem eine Abmessung, die von der geplanten und hinsichtlich der weiteren Behandlung optimierten Abmessung abweicht. So werden beispielsweise entweder die für die zerlegten Teile vorgesehenen Transport- oder Endlagerbehälter ungenügend ausgenutzt oder es müssen zusätzliche Transport- oder Endlagerbehälter zur Verfügung gestellt werden.

Der Erfindung liegt nun die Aufgabe zu Grunde, ein Verfahren zum Zerlegen eines unter Wasser befindlichen Anlagenteils einer kerntechnischen Anlage anzugeben, mit dem die vorstehend genannte Nachteile vermieden sind. Außerdem liegt der Erfindung die Aufgabe zu Grunde, eine nach diesem Verfahren arbeitende Vorrichtung anzugeben.

Hinsichtlich des Verfahrens wird die Aufgabe gemäß der Erfindung gelöst mit einem Verfahren mit den Merkmalen des Patentanspruches 1. Gemäß diesen Merkmalen wird bei einem Verfahren zum Zerlegen eines unter Wasser befindlichen Anlagenteils In eine Wand des Anlagenteils mit einem elektrischen Erodierverfahren zumindest eine im Querschnitt annähernd rechteckförmige Durchgangsöffnung eingebracht. Anschließend wird mit einer Säge ausgehend von einer Stirnseite des Anlagenteiles zumindest ein erster Sägeschnitt eingebracht, der in die Durchgangsöffnung mündet. Ein Sägeblatt der Säge wird im Bereich der Durchgangsöffnung gewendet und es wird in einer von der Richtung des ersten Sägeschnittes abweichenden Richtung ein weiterer Sägeschnitt durchgeführt.

Die Erfindung beruht dabei auf der Idee, dass ein beispielsweise aus der der ATW 51, 2006, Heft 3, S. 170 bis 172 als Contact-Arc-Metal-Cutting (CAMC) bekanntes und zum Schneiden eingesetztes Erodierverfahren grundsätzlich auch geeignet ist, in die Wand eines massiven Anlagenteils Durchgangsöffnungen einzubringen, die entweder unmittelbar als Wendelöcher für das Wenden des Sägeblattes einer Säge, vorzugsweise eine Bandsäge, verwendet werden können oder aber zumindest mittelbar als Ausgangsöffnung für die Herstellung ausreichend großer Wendelöcher oder Wendeöffnungen dienen. Da das Einbringen der Durchgangsöffnungen mit einem Erodierverfahren auf relativ kleine Bereiche des Anlagenteils beschränkt ist, ist das Ausmaß der mit einem Erodierverfahren einhergehenden nachteiligen Verunreinigung des Wassers und der Aufwand für entsprechende Reinigungsmaßnahmen begrenzt. Durch die Verwendung einer verschleißarmen Elektrode, insbesondere aus Graphit oder Wolfram-Kupfer, sind außerdem die eingangs geschilderten Probleme beim Einbringen der Durchgangsöffnungen vermieden.

Wenn in einer alternativen Variante des Verfahrens neben dem ersten Sägeschnitt ein zweiter Sägeschnitt eingebracht wird, der in dieselbe Durchgangsöffnung mündet, und ein auf diese Weise zwischen den Sägeschnitten ausgetrennte Teilstück der Wand entfernt und das Sägeblatt in der auf diese Weise entstehenden Ausnehmung gewendet wird, ist es ausreichend, mit dem Erodierverfahren lediglich eine schmale und noch nicht als Wendeloch geeignete Durchgangsöffnung einzubringen, da die für das Wenden des Sägeblattes erforderliche Höhe der Durchgangsöffnung durch das Einbringen der Ausnehmung erzeugt wird. Dadurch wird zusätzlich die Menge des beim Erodieren entstehenden Sekundärabfalles verringert.

Bei einer bevorzugten Ausgestaltung des Erodierverfahrens wird zwischen einer Elektrode und einer Wand des Anlagenteils durch Anlegen einer elektrischen Spannung ein Lichtbogen erzeugt. Die Elektrode wird anschließend in einer Vorschubrichtung mit ihrer Stirnseite gegen die Wand vorgeschoben, so dass sie durch Aufschmelzen des Anlagenteils im Bereich des Lichtbogens in dieses eindringt und in der Wand eine die Elektrode umgebende Tasche erzeugt. Die beim Aufschmelzen des Anlagenteils in der Tasche entstehende Schmelze wird durch einen Spülstrahl aus der Tasche ausgetrieben und die Vorschubbewegung wird solange fortgeführt bis die Elektrode die Wand durchdringt und auf diese Weise die Durchgangsöffnung in der Wand erzeugt.

Wenn die Elektrode die Form eines Steges mit zwei einander gegenüberliegenden Flachseiten aufweist, und der Spülstrahl derart auf einen zwischen einer Flachseite der Elektrode und der Wand der Tasche gebildeten Spalt gerichtet ist, dass die auf die Flachseite der Elektrode projizierte Mittenachse des Spülstrahls unter einem schiefen Winkel zur Vorschubrichtung verläuft, wird ein effizientes Austreiben der Schmelze aus dem zwischen dem Werkstück und der Elektrode befindlichen Spaltraum bewirkt und ein als "side arcing" bezeichneter erhöhter seitlicher Elektrodenverschleiß vermieden.

Diese Vorgehensweise beruht dabei auf der Überlegung, dass durch einen auf den zwischen Elektrode und Tasche gebildeten Spaltraum unter einem schiefen Winkel zur Vorschubrichtung orientierter Spülstrahl auch bei relativ geringer Intensität eine erheblich effektivere und gleichmäßigere Spülleistung ermöglicht. Durch den schräg in diesen Spaltraum gerichteten Spülstrahl wird nämlich ein Drall erzeugt, der das Austreiben des Schmelzgutes verbessert. Da der Spülstrahl nur mehr eine relativ geringe Intensität aufweisen muss, sind zu dessen Erzeugung nur noch relativ leistungsschwache Pumpen erforderlich.

Wenn der Spülstrahl zusätzlich schräg zur Flachseite der Elektrode gerichtet ist, ist das Ausmaß der Drall- bzw. Wirbelbildung und damit die Spülleistung zusätzlich erhöht. Darüber hinaus hat es sich als besonders vorteilhaft herausgestellt, wenn der Spülstrahl an nur einer Flachseite der Elektrode in den Spalt trifft, nämlich bei horizontaler Ausrichtung der Elektrode in Arbeitsstellung der obenliegenden Flachseite.

In einer bevorzugten Ausgestaltung hat der Spülstrahl die Form eines annähernd parallel zum Spaltraum orientierten Fächers, um auf diese Weise den parallel zur Flachseite der Elektrode verlaufenden Spaltraum vollständig zu erfassen und die Spülleistung zu erhöhen.

Weitere vorteilhafte Ausgestaltungen des Verfahrens sind in den Patentansprüchen 8 bis 12 angegeben.

Hinsichtlich der Vorrichtung wird die genannte Aufgabe gemäß der Erfindung gelöst mit einer Vorrichtung mit den Merkmalen des Patentanspruches 13, deren Vorteile sinngemäß den zu den Patentanspruch 1 angegebenen Vorteilen entsprechen. Vorteilhafte Ausgestaltungen der Vorrichtung sind in den auf Patentanspruch 13 zurück bezogenen Unteransprüchen angegeben.

Zur weiteren Erläuterung der Erfindung wird auf das Ausführungsbeispiel der Zeichnung verwiesen. Es zeigen:
- Fig. 1: eine Vorrichtung zur Durchführung des Verfahrens gemäß der Erfindung in einem schematischen Prinzipbild,
- Fig. 2: eine an eine Wand des Anlagenteils angestellte, bei dem erfindungsgemäßen Verfahren vorzugsweise verwendete Erodiervorrichtung ebenfalls in einem Prinzipbild,
- Fig. 3: und 4 die Erodiervorrichtung in einer Arbeitsposition in einem Längs- bzw. Querschnitt jeweils in einer sche- matischen Prinzipdarstellung,
- Fig. 5: und 6 jeweils eine Düse in einer Seitenansicht bzw. Draufsicht, aus der der Spülstrahl austritt.
- Fig. 7: eine schematische Darstellung, anhand der eine vorteil- hafte Ausgestaltung des Verfahrens gemäß der Erfindung veranschaulicht wird.

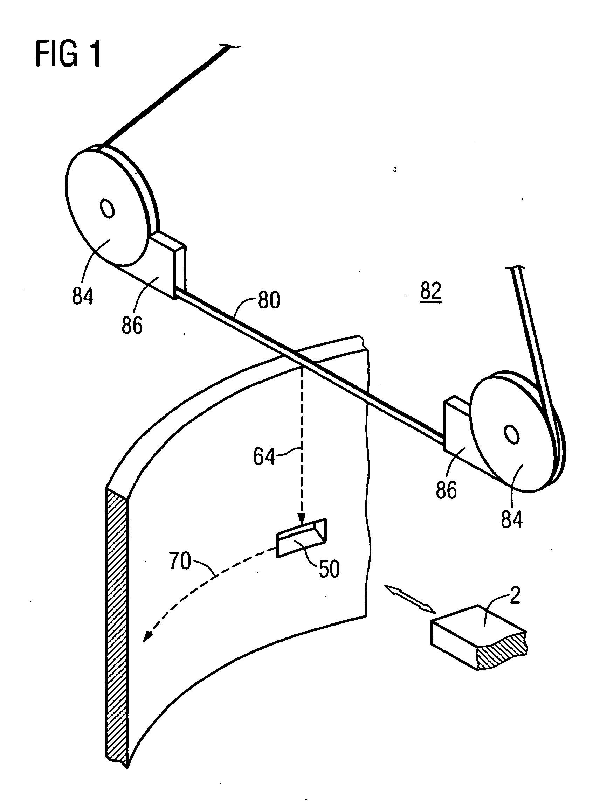

Gemäß Fig. 1 ist mit einer in der Fig. in zurückgefahrener Position schematisch veranschaulichten Elektrode 2 in einem vorherigen Arbeitsschritt in die Wand eines hohlzylindrischen Anlagenteils 4, beispielsweise eine Kernumfassung, eine rechteckförmige Durchgangsöffnung 50 eingebracht worden. Nach Einbringen der Durchgangsöffnung 50 wird an einer Stirnseite das Sägeblatt 80 einer Säge 82, vorzugsweise ein Sägeband einer Bandsäge, angestellt, und mit einem Vorschub der Bandsäge in vertikaler Richtung wird ein erster Sägeschnitt 64 bis zur Durchgangsöffnung 50 durchgeführt wird. In der Durchgangsöffnung 50 wird das Sägeblatt 80 in einer den Umlenkrollen 84 der Bandsäge zugeordneten Umlenkeinheit 86 gewendet, und es wird durch im Beispiel horizontalen Vorschub der Bandsäge ein weiterer Sägeschnitt 70 durchgeführt. Auf diese Weise kann das Anlagenteil 4 sukzessive in ringförmige Segmente (Schüsse) zerlegt werden.

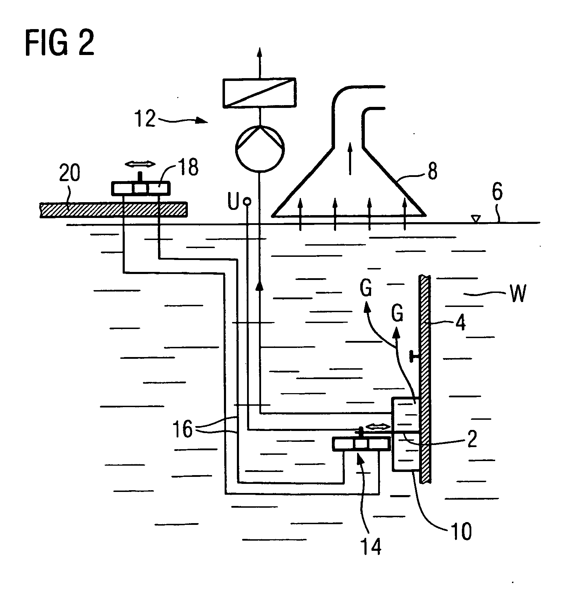

Fig. 2 veranschaulicht eine Erodiervorrichtung zum Durchführen eines Verfahrens. Die Elektrode 2 der Erodiervorrichtung besteht beispielsweise aus Wolfram-Kupfer, vorzugsweise aus Graphit, und ist an die Wand des aus Gründen des Strahlenschutzes unter Wasser W befindlichen Anlagenteiles 4 angestellt. Bei dem in der Figur ausschnittsweise dargestellten Anlagenteil 4 handelt es sich beispielsweise um den zylindrischen Kernmantel (Kernumfassung) eines Reaktordruckbehälters einer zum Rückbau vorgesehenen kerntechnischen Anlage.

Zwischen dem aus einem elektrischen leitfähigen Werkstoff bestehenden Anlagenteil 4 und der Elektrode 2 wird mit einer Strom- bzw. Spannungsquelle U eine Spannung angelegt und ein Lichtbogen erzeugt, der dazu führt, dass das Anlagenteil 4 in einem der Elektrode 2 gegenüberliegenden Oberflächenbereich aufgeschmolzen und auf diese Weise abgetragen wird. Das verwendete Abtragsverfahren entspricht technologisch weitgehend dem zum Schneiden aus der ATW 51, 2006, Heft 3, S. 170 bis 172 bekannten sogenannten "Contact-Arc-Metal-Cutting (CAMC)"-Verfahren, bei dem in einem zyklischen Prozess aus Widerstandserwärmung und frei brennendem Hochstrombogen ein unter Wasser W befindlicher, elektrisch leitender metallischer Werkstoff langsam aufgeschmolzen wird. Die dabei entstehenden Gase G, hauptsächlich Wasserstoff und Sauerstoff, werden mit einer über der Wasseroberfläche 6 angeordneten Absaughaube 8 abgesaugt.

Die Elektrode 2 ist durch eine Haube 10 geführt, die auf das Anlagenteil 2 aufgesetzt ist und dazu dient, einerseits das beim Aufschmelzen entstehende grobe Fugenmaterial aufzufangen und andererseits eine Verschmutzung des das Anlagenteil 4 umgebenden Wassers mit Schwebstoffen zu verhindern. Das innerhalb der Haube 10 befindliche und durch den Erodiervorgang mit Schwebstoffen verunreinigte Wasser W wird mit Hilfe einer Absaug- und Filtereinrichtung 12 permanent abgesaugt und gereinigt. Die Haube 10 ist hierzu entweder unter Belassung eines oder mehrerer Spalte auf das Anlagenteil 4 aufgesetzt oder mit einer Reihe von Öffnungen versehen, so dass das innerhalb der Haube 10 befindliche Wasser W permanent ausgetauscht und durch frisches Wasser W aus der Umgebung ersetzt wird.

Die Zustellung der Elektrode 2 an das Anlagenteil 4 erfolgt über einen in der Figur nur schematisch angedeuteten, mit Wasser gefüllten kolbenstangenlosen pneumatischen Linearzylinder 14, der über Pneumatikleitungen 16 mit einem baugleichen Linearzylinder 18 verbunden ist, der sich bedienerseitig auf einer Arbeitsplattform 20 befindet. Auf diese Weise kann die Elektrode 2 durch manuelles Betätigen des Linearzylinders 18 mit einer 1:1-Übersetzung mit ihrer Stirnseite in eine Vorschubrichtung - in der Figur angedeutet durch Doppelpfeile - vorgeschoben werden. Ein solcher vom Bediener vorgenommener manueller Vorschub bietet diesem eine unmittelbare Rückkopplung der auf die Elektrode 2 wirkenden Kraft und erleichtert ihm, die Vorschubbewegung der Elektrode 2 korrekt einzustellen. Der Einsatz parallel geschalteter, wassergefüllter pneumatischer Linearzylinder 14, 16 hat dabei den Vorteil, dass diese auch mit Wasserfüllung sehr reibungsarm laufen und keine Hydraulikpumpe für den Aufbau eines Systems benötigen. Für den Fall, dass höhere Zustellkräfte erforderlich sind, ist es auch möglich, zum Bedienen einen Linearzylinder 18 zu verwenden, der einen geringeren Innendurchmesser als der Linearzylinder 14 und damit einen größeren Hub als dieser aufweist. Alternativ hierzu sind auch grundsätzlich andere Antriebsarten, beispielsweise pneumatische Schwenkantriebe oder Spindelantriebe einsetzbar. Ebenso kann anstelle eines manuellen Vorschubs auch ein automatischer Vorschub vorgesehen sein.

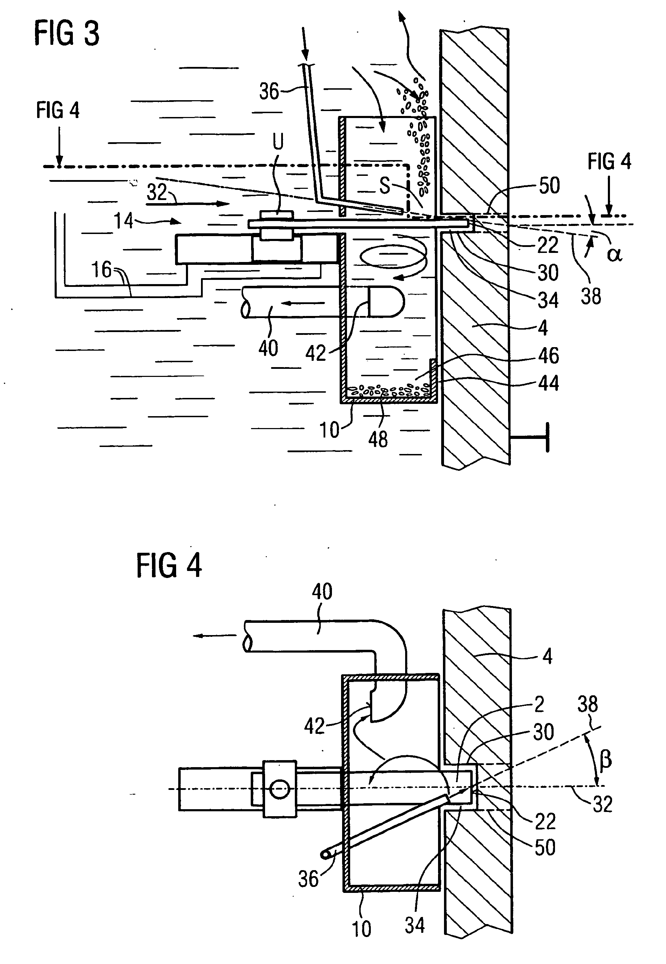

Den Fig. 3 und 4 ist zu entnehmen, dass die Elektrode 2 die Form eines flachen, sich in eine Längsrichtung erstreckenden Steges oder Quaders mit einer schmalen rechteckförmigen Stirnfläche aufweist. In Fig. 2 und 3 ist die Vorrichtung in einer Arbeitsposition dargestellt, bei der die Elektrode 2 bereits in die Wand des Anlagenteils 4 eingedrungen ist und dort eine Tasche 30 gebildet hat. Das Aufschmelzen des Anlagenteils 4 erfolgt dabei in erster Linie in einer der Stirnfläche 22 der Elektrode 2 gegenüberliegenden Zone der Wand des Anlagenteils 4. Zwischen der Elektrode 2 und der Wand entsteht beim Verfahren der Elektrode 2 in Vorschubrichtung 32 ein die Elektrode 2 umgebender Spaltraum 34, in dem sich das aufgeschmolzene Fugenmaterial sammelt.

Zum Austreiben des Fugenmaterials aus dem zwischen der Elektrode 2 und dem Anlagenteil 4 gebildeten Spaltraum 34 ist durch die die Elektrode 2 an ihrem freien Ende umgebenden Haube 10 eine Spülleitung 36 in den Innenraum 10 der Haube 10 geführt, aus der ein Spülstrahl S austritt. Der Spülstrahl S ist auf den zwischen einer oberen Flachseite der Elektrode 2 und der Wand der Tasche 30 gebildeten Spaltraum 34 gerichtet. Die Mittenachse 38 des aus dem freien Ende der Spülleitung 36 austretenden Spülstrahls S ist dabei unter einem Winkel α schräg zur Flachseite der Elektrode 2 orientiert. Die Projektion der Mittenachse 38 auf die Flachseite der Elektrode verläuft ebenfalls unter einem schiefen Winkel β zur Vorschubrichtung 32. Auf diese Weise wird innerhalb der Haube 10 ein Drall und damit eine Zyklonwirkung erzeugt, die das Austreiben und Aufsammeln des Fugenmaterials signifikant verbessert. Unterstützt wird diese Zyklonwirkung außerdem durch die permanente Absaugung von Wasser W aus dem Innenraum der Haube 10 über ein in das Innere der Haube 10 führendes und im Inneren der Haube 10 gekrümmtes Saugrohr 40, dessen Saugöffnung 42 von der Wand des Anlagenteils 4 abgewandt ist und sich in einem Randbereich des Innenraums der Haube 10 befindet.

Die Haube 10 ist unter Belassung eines Spaltes 44 zwischen dem Rand der Haube 10 und der Wand des Anlagenteils 4 am Anlagenteil 4 angeordnet, so dass in den Innenraum der Haube 10 permanent frisches Wasser W aus der Umgebung nachströmen kann und beim Absaugen von Wasser W ein permanenter Wasserstrom innerhalb der Haube 10 erzeugt wird.

Die Haube 10 ist in ihrem in Arbeitsposition unterem Bereich mit einer Auffangwanne 46 versehen in der das mit Hilfe des Spülstrahls S aus der Schmelzzone ausgetriebene grobe Schmelzgut 48 aufgefangen werden kann. Während des Absinkens des Schmelzgutes 48 erkaltet dieses an seiner Oberfläche, so dass es beim Antreffen in der Auffangwanne 46 zumindest in seinem Außenbereich bereits erstarrt ist und nicht mehr mit der Haube 10 verschweißen kann. Im Ausführungsbeispiel ist die Haube 10 in ihrem in Arbeitsposition oberen Bereich offen.

Die Elektrode 2 wird nun so lange vorgeschoben, bis sie die Wand des Anlagenteils 4 durchdringt und auf diese Weise eine in den Fig. 3 und 4 gestrichelt angedeutete schmale, der Form der Elektrode 2 entsprechende Durchgangsöffnung 50 erzeugt, deren Breite größer ist als deren Höhe.

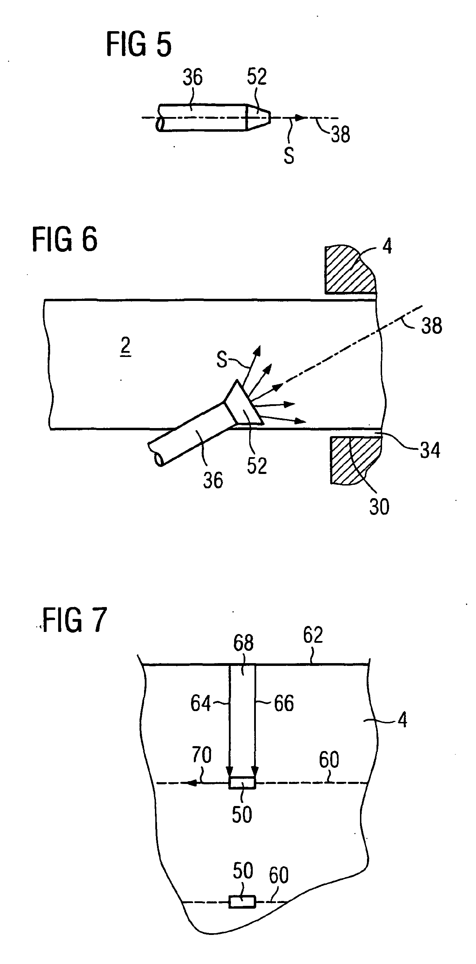

Gemäß Fig. 5 und 6 ist die Austrittsöffnung der Spülleitung 36 als flache und sich in einer Ebene konisch erweiternde Düse 52 gestaltet, aus der der Spülstrahl S fächerförmig austritt, so dass er den zwischen der Flachseite der Elektrode 2 und dem Anlagenteil 4 innerhalb der Tasche 30 befindlichen Spaltraum 34 vollständig erfasst. Ein Teil des Spülstrahls W wird am Spaltraum 34 vorbei geleitet, so dass er die Drallbildung unterstützt.

Bei der in Fig. 7 veranschaulichten besonders vorteilhaften Vorgehensweise werden bei dem Zerlegen eines großvolumigen hohlen Anlagenteiles 4, beispielsweise ebenfalls eine Kernumfassung, in dieses eine Mehrzahl im Querschnitt annähernd rechteckigen Durchgangsöffnungen 50 eingebracht, die sich untereinander in voneinander beabstandeten horizontalen Ebenen 60 befinden. Mit einer in der Fig. 7 nicht dargestellten Bandsäge wird anschließend ausgehend von einer Stirnseite 62 des Anlagenteils 4 ein erster Sägeschnitt 64, im Beispiel ein Vertikalschnitt, durchgeführt, der in die Durchgangsöffnung 50 an ihrem seitlichen Rand mündet. Danach wird mit der Bandsäge ein zweiter, im wesentlichen parallel dazu verlaufender Sägeschnitt 66 durchgeführt, der ebenfalls bis zur Durchgangsöffnung 50 reicht, so dass ein zwischen den Sägeschnitten 64 und 66 befindliches Teilstück 68 ausgeschnitten wird. Dieses Teilstück 68 wird entfernt, so dass ein in der Bandsäge laufendes Sägeband im Bereich der auf diese Weise entstehenden Ausnehmung gewendet werden kann. Anschließend wird mit dem gewendeten Sägeband der beispielsweise quer zu den ersten bzw. zweiten Sägeschnitten 64 und 66 verlaufende weitere Sägeschnitt 70, im Beispiel ein Horizontalschnitt, durchgeführt, so dass im Beispielfall das Anlagenteil 4 sukzessive in eine Mehrzahl von Schüssen zerlegt wird.

## Patentansprüche

1. Verfahren zum Zerlegen eines unter Wasser befindlichen Anlagenteils (4) einer kerntechnischen Anlage das folgende Schritte umfasst:
a) In eine Wand des Anlagenteils (4) wird mit einem elektrischen Erodierverfahren zumindest eine im Querschnitt annähernd rechteckförmige Durchgangsöffnung (50) eingebracht,
b) mit einer Säge wird ausgehend von einer Stirnseite des Anlagenteiles zumindest ein erster Sägeschnitt (64) eingebracht, der in die Durchgangsöffnung mündet,
c) ein Sägeblatt (80) der Säge (82) wird in der Durchgangsöffnung (50) gewendet und es wird in einer von der Richtung des ersten Sägeschnittes (64) abweichenden Richtung ein weiterer Sägeschnitt (70) durchgeführt.

2. Verfahren zum Zerlegen eines unter Wasser befindlichen Anlagenteils (4) einer kerntechnischen Anlage das folgende Schritte umfasst:
a) In eine Wand des Anlagenteils (4) wird mit einem elektrischen Erodierverfahren zumindest eine im Querschnitt annähernd rechteckförmige Durchgangsöffnung (50) eingebracht,
b) mit einer Säge wird ausgehend von einer Stirnseite des Anlagenteiles zumindest ein erster Sägeschnitt (64) eingebracht, der in die Durchgangsöffnung mündet,
c) neben dem ersten Sägeschnitt (64) wird ein zweiter Sägeschnitt (66) eingebracht, der in dieselbe Durchgangsöffnung (50) mündet,
d) ein auf diese Weise zwischen den Sägeschnitten ausgetrenntes Teilstück (68) der Wand wird entfernt und das Sägeblatt (80) wird in der auf diese Weise entstehenden Ausnehmung gewendet.

3. Verfahren nach Anspruch 1 oder 2, bei dem als Säge (82) eine Bandsäge verwendet wird, deren Sägeband in der Durchgangsöffnung (50) bzw, in der Ausnehmung gewendet wird.

4. Verfahren nach einem der vorhergehenden Ansprüche, mit folgenden weiteren Merkmalen:
a) zwischen einer Elektrode (2) und der Wand des Anlagenteils (4) wird durch Anlegen einer elektrischen Spannung (U) ein Lichtbogen erzeugt,
b) die Elektrode (2) wird in einer Vorschubrichtung (32) mit ihrer Stirnseite gegen die Wand vorgeschoben, so dass sie durch Aufschmelzen des Anlagenteils (4) im Bereich des Lichtbogens in dieses eindringt und in der Wand eine die Elektrode (2) umgebende Tasche (30) erzeugt,
c) ein beim Aufschmelzen des Anlagenteils (4) in der Tasche (30) entstehendes Schmelzgut wird durch einen Spülstrahl (S) aus der Tasche (30) ausgetrieben,
d) die Vorschubbewegung wird solange fortgeführt bis die Elektrode (2) die Wand durchdringt und auf diese Weise die Durchgangsöffnung (50) in der Wand erzeugt.

5. Verfahren nach Anspruch 4, bei dem die Elektrode die Form eines Steges mit zwei einander gegenüberliegenden Flachseiten aufweist, und bei der der Spülstrahl derart auf einen zwischen einer Flachseite der Elektrode und der Wand der Tasche gebildeten Spalt gerichtet ist, dass die auf die Flachseite der Elektrode projizierte Mittenachse des Spülstrahls unter einem schiefen Winkel zur Vorschubrichtung verläuft.

6. Verfahren nach Anspruch 5, bei dem der Spülstrahl schräg zur Flachseite der Elektrode gerichtet ist.

7. Verfahren nach Anspruch 5 oder 6, bei dem der Spülstrahl die Form eines Fächers hat.

8. Verfahren nach Anspruch 5, 6 oder 7, bei dem die Elektrode mit ihrer Flachseite annähernd senkrecht zur Vertikalen ausgerichtet ist, und bei dem der Spülstrahl in den über der Elektrode befindlichen Spalt gerichtet wird.

9. Verfahren nach einem der Ansprüche 5 bis 8, bei dem das durch den Spülstrahl ausgetriebene Schmelzgut in einem Auffangbehälter aufgefangen wird.

10. Verfahren nach Anspruch 9, bei dem als Auffangbehälter eine Haube verwendet wird, in der das freie Ende der Elektrode angeordnet ist, und die mit ihrem eine Öffnung in der Haube umgebenden Rand an die Wand angestellt wird.

11. Verfahren nach Anspruch 10, bei dem aus der Haube Wasser abgesaugt und gefiltert wird und Wasser aus dem die Haube umgebenden Raum in das Innere der Haube strömt.

12. Verfahren nach einem der vorhergehenden Ansprüche, bei dem die beim Erodieren durch Aufschmelzen des Anlagenteils entstehenden Gase über der Wasseroberfläche mit einer Absaughaube aufgefangen werden.

13. Vorrichtung zum Durchführen des Verfahrens nach Anspruch 1 oder 2, mit:
a) einer Erodiervorrichtung mit einer an eine Wand des Anlagenteils (4) anstellbaren im Querschnitt annähernd rechteckförmigen Elektrode (2), und
b) mit einer an einer Stirnseite des Anlagenteiles anstellbaren Säge (82) zum Einbringen eines in die Durchgangsöffnung (50) mündenden Sägeschnittes (64), mit einem wendbaren Sägeblatt (82).

14. Vorrichtung nach Anspruch 13, bei der die Säge eine Bandsäge ist.

15. Vorrichtung nach Anspruch 13 oder 14, mit:
a) einer die Form eines Steges mit zwei einander gegenüberliegenden Flachseiten aufweisenden Elektrode, die in eine parallel zu den Flachseiten verlaufende Vorschubrichtung verschiebbar gelagert ist,
b) einer Spannungsquelle zum Erzeugen einer Spannung und eines dadurch verursachten Lichtbogens zwischen der Elektrode und dem Anlagenteil,
c) einer oberhalb einer Flachseite der Elektrode angeordneten Düse zum Erzeugen eines zur Stirnseite der Elektrode gerichteten Spülstrahls zum Austreiben eines beim Aufschmelzen des Anlagenteils entstehenden Schmelzguts, der derart auf einen zwischen einer Flachseite der Elektrode und der Tasche gebildeten Spalt gerichtet ist, dass die auf die Flachseite der Elektrode projizierte Mittenachse des Spülstrahls unter einem schiefen Winkel zur Vorschubrichtung verläuft.

16. Vorrichtung nach Anspruch 15, mit einem Auffangbehälter zum Auffangen des durch den Spülstrahl ausgetriebenen Schmelzguts, der als Haube geformt ist, in der das freie Ende der Elektrode angeordnet ist, und die mit ihrem eine Öffnung in der Haube umgebenden Rand an die Wand anstellbar ist.

## Claims

1. Method for dismantling a submerged assembly component (4) of a nuclear facility, comprising the following steps:
a) at least one opening (50), which is nearly rectangular in its cross-section, is introduced into a wall of the assembly component (4) with an electrical erosion process,
b) at least one first saw cut (64) is introduced with a saw from a front side of the assembly component, which opens out into the opening,
c) a saw blade (80) of the saw (82) is turned in the opening (50) and a further saw cut (70) is carried out in a direction differing from the direction of the first saw cut (64).

2. Method for dismantling a submerged assembly component (4) of a nuclear facility, comprising the following steps:
a) at least one opening (50), which is nearly rectangular in its cross-section, is introduced into a wall of the assembly component (4) with an electrical erosion process,
b) at least one first saw cut (64) is introduced with a saw from a front side of the assembly component, which opens out into the opening,
c) as well as the first saw cut (64), a second saw cut (66) is introduced, which opens out into the same opening (50),
d) a section (68) of the wall separated between the saw cuts in this way is removed and the saw blade (80) is turned in the cavity that arises in this way.

3. Method according to claim 1 or 2, wherein a band saw is used as the saw (82), the saw band of which is used in the opening (50) or cavity.

4. Method according to one of the preceding claims, having the following further features:
a) an electric arc is generated between an electrode (2) and the wall of the assembly component (4) by applying an electrical voltage (U),
b) the electrode (2) is moved with its front side against the wall in a feed direction (32), such that, by melting the assembly component (4) in the region of the electric arc, it penetrates this, and a recess (30) surrounding the electrode (2) is produced in the wall,
c) a molten material arising during the melting of the assembly component (4) in the recess (30) is discharged from the recess (30) by a water jet (S),
d) the feed movement is continued until the electrode (2) penetrates the wall and the opening (50) in the wall is produced in this way.

5. Method according to claim 4, wherein the electrode has the shape of a bar with two flat sides opposite each another, and wherein the water jet is aligned onto a gap formed between a flat side of the electrode and the wall of the recess in such a way that the central axis of the water jet projected onto the flat side of the electrode runs at an oblique angle with respect to the feed direction.

6. Method according to claim 5, wherein the water jet is aligned at an angle to the flat side of the electrode.

7. Method according to claim 5 or 6, wherein the water jet has the shape of a fan.

8. Method according to claim 5, 6, or 7, wherein the electrode is aligned with its flat side almost perpendicular to the vertical, and wherein the water jet is directed into the gap located above the electrode.

9. Method according to one of claims 5 to 8, wherein the molten material discharged by the water jet is collected in a collecting container.

10. Method according to claim 9, wherein a hood is used as a collecting container, in which the free end of the electrode is arranged, and which is engaged with the wall with its edge surrounding an opening in the hood.

11. Method according to claim 10, wherein water is sucked out of the hood and filtered and water flows from the space surrounding the hood into the interior of the hood.

12. Method according to one of the preceding claims, wherein the gases arising above the surface of the water during erosion by melting the assembly components are collected in a suction hood.

13. Method for carrying out the method according to claim 1 or 2, having:
a) an erosion device with an electrode (2) that is nearly rectangular in its cross-section and that can be engaged with a wall of the assembly component (4), and
b) a saw (82) that can be engaged with a front face of the assembly component for introducing a saw cut (64) into the opening (50), with a turnable saw blade (82).

14. Device according to claim 13, wherein the saw is a band saw.

15. Device according to claim 13 or 14, having:
a) an electrode having the shape of a bar with two opposite flat sides, which is mounted displaceably in a feed direction running parallel to the flat side,
b) a voltage source for generating a voltage and an electric arc caused thereby between the electrode and the assembly component,
c) a nozzle arranged above a flat side of the electrode for generating a water jet pointing towards the front face of the electrode for discharging a molten material arising during the melting of the assembly component, which is aligned onto a gap formed between a flat side of the electrode and the wall of the recess in such a way that the central axis of the water jet projected onto the flat side of the electrode runs at an oblique angle with respect to the feed direction.

16. Device according to claim 15, having a collecting container for collecting the molten material discharged by the water jet, said container being designed as a hood in which the free end of the electrode is arranged and which can be engaged with the wall with its edge surrounding an opening in the hood.

## Revendications

1. Procédé de désassemblage d'une partie d'installation (4) se trouvant sous eau d'une installation nucléaire qui comprend les étapes suivantes:
a) dans une paroi de la partie d'installation (4), on pratique avec un procédé d'électroérosion au moins une ouverture de passage (50) de section sensiblement près rectangulaire,
b) avec une scie, on pratique au moins une première découpe (64) en partant d'une face avant de la partie d'installation, qui débouche dans l'ouverture de passage,
c) une lame de scie (80) de la scie (82) est tournée dans l'ouverture de passage (50) et on effectue une autre découpe à la scie (70) dans une direction s'écartant de la direction de la première découpe à la scie (64).

2. Procédé de désassemblage d'une partie d'installation (4) se trouvant sous eau d'une installation nucléaire qui comprend les étapes suivantes:
a) dans une paroi de la partie d'installation (4), on pratique avec un procédé d'électroérosion au moins une ouverture de passage (50) de section à peu près rectangulaire,
b) avec une scie, on pratique au moins une première découpe à la scie (64) en partant d'une face avant de la partie d'installation, qui débouche dans l'ouverture de passage,
c) à côté de la première découpe à la scie (64), on pratique une deuxième découpe à la scie (66) qui débouche dans la même ouverture de passage (50),
d) une partie (68) de la paroi séparée entre les découpes à la scie est enlevée et la lame de scie (80) est tournée dans l'évidement créé de cette manière.

3. Procédé selon la revendication 1 ou 2 selon lequel on utilise comme scie (82) une scie à ruban dont le ruban de scie est tourné dans l'ouverture de passage (50) ou dans l'évidement.

4. Procédé selon une quelconque des revendications précédentes avec les autres caractéristiques suivantes :
a) entre une électrode (2) et la paroi de la partie d'installation (4), on crée un arc électrique en appliquant une tension électrique (U),
b) l'électrode (2) est avancée dans une direction (32) avec son côté de face contre la paroi de sorte qu'elle pénètre dans celle-ci dans la zone de l'arc électrique par fusion de la partie d'installation (4) et produit dans la paroi une poche (30) entourant l'électrode (2),
c) une matière fondue se formant dans la poche lors de la fusion de la partie d'installation (4) est expulsée de la poche (30) par un jet de rinçage (S),
d) le mouvement d'avance se poursuit jusqu'à ce que l'électrode (2) pénètre dans la paroi et produise de cette manière l'ouverture de passage (50) dans la paroi.

5. Procédé selon la revendication 4 selon lequel l'électrode présente la forme d'une barrette avec deux côtés plats opposés l'un de l'autre et pour laquelle le jet de rinçage est dirigé sur une fente constituée entre un côté plat de l'électrode et la paroi de la poche de telle sorte que l'axe central du jet de rinçage projeté sur la côté plat de l'électrode passe sous un angle oblique par rapport à la direction d'avance.

6. Procédé selon la revendication 5 selon lequel le jet de rinçage est dirigé incliné par rapport au côté plat de l'électrode.

7. Procédé selon la revendication 5 ou 6 selon lequel le jet de rinçage a la forme d'un éventail.

8. Procédé selon la revendication 5, 6 ou 7 selon lequel l'électrode est orientée avec son côté plat sensiblement perpendiculairement à la verticale et pour lequel le jet de rinçage est dirigé dans la fente se trouvant au-dessus de l'électrode.

9. Procédé selon la revendication 5 à 8 selon lequel la matière en fusion chassée par le jet de rinçage est recueillie dans un bac de récupération.

10. Procédé selon la revendication 9 selon lequel une hotte est utilisée comme bac de récupération dans laquelle l'extrémité libre de l'électrode est disposée et qui est installée sur la paroi avec son bord entourant une ouverture dans la hotte.

11. Procédé selon la revendication 10 selon lequel l'eau est aspirée de la hotte et filtrée et l'eau coule de l'espace entourant la hotte à l'intérieur de la hotte.

12. Procédé selon l'une quelconque des revendications précédentes selon lequel les gaz générés lors de l'érosion par fusion de la partie d'installation sont recueillis au-dessus de la surface de l'eau au moyen d'une hotte d'aspiration.

13. Dispositif destiné à exécuter le procédé selon la revendication 1 ou 2, avec :
a) un dispositif d'électroérosion avec une électrode (2) de section sensiblement rectangulaire, pouvant être mise en place sur une paroi de la partie d'installation (4), et
b) une scie (82) pouvant être mise en place sur une face avant de la partie d'installation pour pratiquer une découpe à la scie (64) débouchant dans l'ouverture de passage (50), avec une lame de scie (82) pivotable.

14. Dispositif selon la revendication 13 dans lequel la scie est une scie à ruban.

15. Dispositif selon la revendication 13 ou 14, avec :
a) une électrode présentant la forme d'une barrette avec deux côtés plats opposés l'un de l'autre qui est montée mobile dans un dispositif d'avance passant parallèlement aux côtés plats,
b) une source de tension destinée à produire une tension et un arc électrique causé par celle-ci entre l'électrode et la partie d'installation,
c) une buse disposée au-dessus d'un côté plat de l'électrode pour produire un jet de rinçage dirigé vers le côté de face de l'électrode pour évacuer une matière en fusion générée lors de la fusion de la partie d'installation, qui est dirigée sur une fente constituée entre un côté plat de l'électrode et la poche de sorte que l'axe central du jet de rinçage projeté sur le côté plat de l'électrode passe sous un angle oblique par rapport à la direction de l'avance.

16. Dispositif selon la revendication 15 avec un bac de réception pour recueillir la matière en fusion évacuée par le jet de rinçage, qui est formé comme une hotte dans laquelle est disposée l'extrémité libre de l'électrode et qui peut être mise en place sur la paroi avec son bord entourant une ouverture dans la hotte.
